# FASCICULE DE BREVET EUROPEEN

(11) **EP 1 032 484 B1**
(45) Date de publication et mention de la délivrance du brevet: **13.02.2002**
(21) Numéro de dépôt: 98955668.3
(22) Date de dépôt: 16.11.1998
(51) Int. Cl.: B23Q 11/00, B23Q 11/10, B23Q 11/12

(54) **DISPOSITIF POUR REFROIDIR DE FA ON HOMOGENE LA ZONE D'USINAGE D'UNE MACHINE-OUTIL**
VORRICHTUNG ZUR HOMOGENEN KÜHLUNG DES ARBEITSBEREICHES EINER WERKZEUGMASCHINE
DEVICE FOR HOMOGENEOUS COOLING OF A MACHINE-TOOL MACHINING ZONE

(30) Priorité: 17.11.1997 FR 9714371
(43) Date de publication de la demande: 06.09.2000
(73) Titulaire: AUTOMOBILES PEUGEOT, 75116 Paris (FR); AUTOMOBILES CITROEN, 92200 Neuilly-sur-Seine (FR)
(72) Inventeur: BARRA, Christian, F-42170 Saint Just Saint-Rambert (FR)
(74) Mandataire: Thinat, Michel
(86) Numéro de dépôt international: FR9802442
(87) Numéro de publication internationale: WO9925518

(56) Documents cités:
- DE-A- 4 132 822
- FR-A- 2 751 254
- PATENT ABSTRACTS OF JAPAN vol. 013, no. 244 (M-834), 7 juin 1989 & JP 01 051252 A (HITACHI LTD), 27 février 1989
- PATENT ABSTRACTS OF JAPAN vol. 010, no. 151 (M-483), 31 mai 1986 & JP 61 004644 A (MITSUBISHI DENKI KK), 10 janvier 1986

## Description

La présente invention concerne un dispositif pour refroidir de façon homogène la zone d'usinage d'une machine-outil, comme divulgué dans le document JP-A-01 051252.

Les machines-outils permettant l'usinage de pièces, tels que par exemple des tours d'usinage, produisent une très forte quantité de chaleur qui est générée par le phénomène de coupe par enlèvement de métal de la pièce à usiner.

Cette chaleur est répartie sur plusieurs composants de la machine-outil en provoquant un échauffement de ceux-ci.

Ces échauffements sont les suivants :
- Echauffement de l'outil de coupe
   L'arête de coupe de l'outil travaillant à haute température, la chaleur se diffuse' dans le corps de l'outil ;
- Echauffement de la pièce usinée
   L'arrachement des copeaux échauffe la pièce au contact de l'outil de coupe et la chaleur se diffuse dans le corps de la pièce ;
- Echauffement des copeaux
   Les copeaux sont produits au point de contact entre pièce et outil de coupe et sont donc particulièrement chauds ;
- Echauffement des éléments constituant le bâti de la machine-outil
   Les copeaux d'usinage projetés roulent ou frottent sur ces éléments de bâti avant d'être évacués par des moyens appropriés, tels que des goulottes d'évacuation ou des convoyeurs de copeaux, et échauffent ces moyens pendant leur passage dans ceux-ci ;
- Echauffement de l'air ambiant de la zone d'usinage
   L'air ambiant de la zone d'usinage est échauffé par les copeaux, la pièce usinée et l'outil de coupe.

Ces divers échauffements nuisent à la précision d'usinage de la pièce car ils influent en particulier sur les dimensions de celle-ci.

Les machines-outils connues actuellement utilisent le liquide de lubrification de coupe pour refroidir les parties, notamment la zone d'usinage, de la machine en arrosant celles-ci par des buses orientables unidirectionnelles. Pour une efficacité accrue du liquide de refroidissement, celui-ci est injecté dans les buses orientables unidirectionnelles à partir d'une pompe puisant dans une source de liquide thermiquement stable. Il existe deux principaux types de sources de liquide thermiquement stable, à savoir une cuve de très grande capacité et une cuve climatisée par un système annexe.

Cependant, de tels dispositifs ont pour inconvénient que l'étendue des zones à refroidir de la machine-outil entraine une multiplication des buses unidirectionnelles et des tubulures d'arrivée de liquide auxquelles elles sont reliées, augmentant ainsi la consommation en liquide de refroidissement et les coûts. De plus, ces buses doivent être orientées en direction des différentes zones à refroidir, ce qui n'est pas toujours aisé. Enfin, le coût de ces dispositifs connus de refroidissement est très élevé.

La présente invention propose un dispositif permettant d'éliminier les inconvénients ci-dessus des dispositifs connus.

A cet effet, le dispositif de l'invention pour refroidir de façon homogène la zone d'usinage d'une machine-outil, comprenant au moins une tubulure d'arrivée de liquide sous pression de refroidissement reliée à au moins un moyen de distribution du liquide de refroidissement vers la zone d'usinage, est caractérisé en ce que le moyen de distribution comprend une buse multidirectionnelle permettant de pulvériser le liquide de refroidissement dans pratiquement tout le volume occupé par la zone d'usinage à refroidir.

La buse multidirectionnelle comporte une tête rotative ayant des orifices de pulvérisation de jets du liquide de refroidissement dans le volume de la zone d'usinage.

Avantageusement, la buse multidirectionnelle est auto-tournante et peut être du type tourniquet.

La zone d'usinage est constituée par une enceinte fermée dans laquelle sont disposées la tête d'usinage de la machine-outil, la pièce à usiner et la buse multidirectionelle.

La machine-outil est une machine d'usinage à haute vitesse, telle qu'un centre d'usinage.

De préférence, le liquide de refroidissement est du liquide de lubrification de coupe qui, si nécessaire, peut être recyclé par une centrale de filtration ayant pour fonctions d'aspirer du liquide au fond du bâti de la machine-outil, de filtrer le liquide aspiré, le cas échéant de le ramener à sa température de refroidissement, et de pomper le liquide pour le réinjecter dans la buse multidirectionnelle au travers de la tubulure d'arrivée.

Avantageusement, la buse multidirectionnelle est également apte à arroser la zone d'usinage pour entraîner les copeaux d'usinage avec le liquide de refroidissement vers le fond du bâti de la machine-outil.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 représente une vue d'ensemble d'une machine-outil ; et
- la figure 2 est une vue en perspective de la zone d'usinage de la machine-outil refroidie conformément à l'invention.

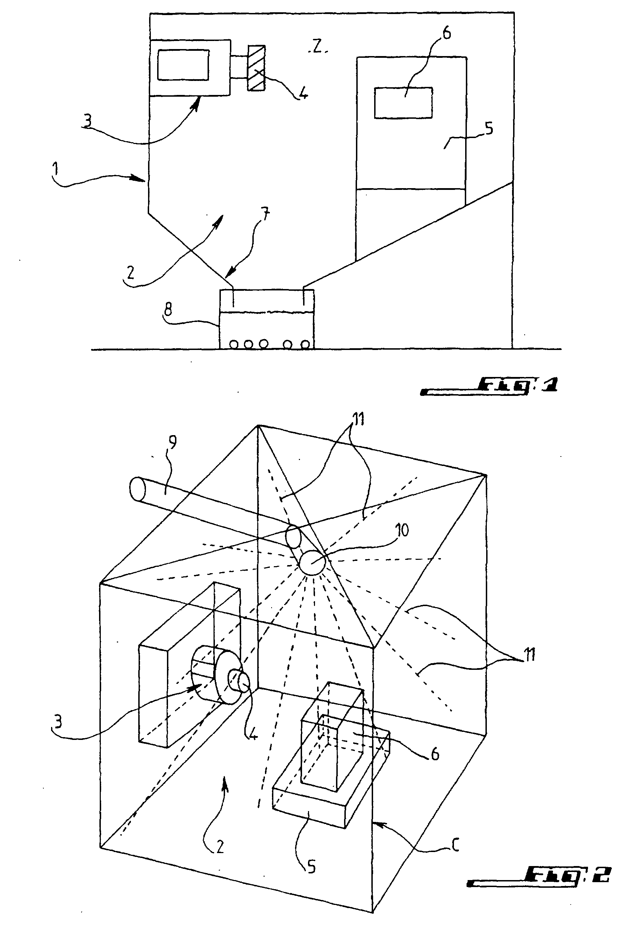

En se reportant aux figures 1 et 2, la référence 1 désigne une enceinte contenant une machine-outil 2 comportant une tète d'usinage 3 à outil de coupe 4 et un montage 5 de support d'une pièce à usiner 6 par enlèvement de matière en formant des copeaux d'usinage. La machine-outil 2 comporte dans sa partie inférieure définie par des bâtis de celle-ci des moyens de récupération et d'évacuation du liquide de lubrification de coupe et des copeaux et constitués dans le cas présent par une goulotte 7, dont les parois de flancs ont une pente importante pour améliorer la récupération des liquides et des copeaux, et une cuve 8 de récupération du liquide de lubrification et des copeaux qui peuvent être évacués par un dispositif approprié (non représenté).

L'enceinte 1 contient également une tubulure 9 d'arrivée du liquide de lubrification de coupe reliée d'une part à une source d'alimentation et d'autre part à un moyen de distribution 10 du liquide de lubrification de coupe dans une zone d'usinage Z définie par l'enceinte 1 constituée d'un ensemble formant capot C de la machine-outil comme cela ressort mieux de la figure 2.

Selon l'invention, le moyen de distribution est constitué par au moins une buse multidirectionnelle 10 permettant de pulvériser du liquide de refroidissement dans pratiquement tout le volume occupé par la zone d'usinage Z à refroidir.

Plus précisément, la buse multidirectionnelle 10 est disposée dans l'enceinte 1 en partie supérieure de celle-ci de façon à arroser la zone d'usinage par des jets de liquide 11 symbolisés en pointillés à la figure 2 et ayant des directions favorisant le refroidissement en particulier de l'outil de coupe 4, de la pièce usinée 6, des copeaux, de l'air ambiant et des bâtis de la machine-outil. De la sorte, on refroidit de façon homogène tous ces composants ce qui permet de garantir la précision d'usinage par un maintien des dimensions de la pièce et de l'outil.

La buse multidirectionnelle 10 est du type, connu en soi, comprenant une tête rotative ayant des orifices de pulvérisation de jets du liquide de refroidissement dans le volume de la zone d'usinage. Pour améliorer l'efficacité de refroidissement, la buse multidirectionnelle 10 peut être auto-tournante, voir même du type tourniquet, également connu en soi.

Bien entendu, si le volume de la zone d'usinage à refroidir est trop important, il est possible de prévoir plusieurs buses multidirectionnelles dont le nombre tiendra compte de ce volume.

Si nécessaire, le fluide de lubrification de coupe pour refroidir la zone d'usinage peut être recyclé par la centrale de filtration conventionnelle définie précédemment, le cas échéant équipée de moyens de climatisation pour maintenir la température du liquide de refroidissement à une valeur stable. Le fluide de lubrification de coupe utilisé pour refroidir la zone d'usinage peut être du type conventionnel composé d'environ 95 % d'eau et d'environ 5 % d'huile soluble.

La buse multidirectionnelle 10 peut également être utilisée pour arroser la zone d'usinage de la machine-outil en pulvérisant des jets de liquide suivant un angle permettant l'entraînement de copeaux en direction de la goulotte d'évacuation 7. Il est également possible de prévoir comme liquide de refroidissement tout liquide approprié autre que le liquide de lubrification de coupe.

## Revendications

1. Dispositif pour refroidir de façon homogène la zone d'usinage (Z) d'une machine-outil, comprenant au moins une tubulure (9) d'arrivée de liquide sous pression de refroidissement reliée à au moins un moyen (10) de distribution du liquide de refroidissement vers la zone d'usinage (Z), **caractérisé en ce que** le moyen de distribution (10) comprend une buse multidirectionnelle permettant de pulvériser le liquide de refroidissement dans pratiquement tout le volume occupé par la zone d'usinage à refroidir (Z) et **en ce que** la buse multidirectionnelle (10) comporte une tête rotative ayant des orifices de pulvérisation de jets du liquide de refroidissement dans le volume de la zone d'usinage (Z).

2. Dispositif selon la revendication 1, **caractérisé en ce que** la buse multidirectionnelle (10) est auto-tournante.

3. Dispositif selon la revendication 1 ou 2, **caractérisé en ce que** la buse multidirectionnelle (10) est du type tourniquet.

4. Dispositif selon l'une des revendications précédentes, **caractérisé en ce que** la zone d'usinage (Z) est constituée par une enceinte (C) dans laquelle sont disposées la tête d'usinage (3) de la machine-outil, la pièce à usiner (6) et la buse multidirectionnelle (10).

5. Dispositif selon l'une des revendications précédentes, **caractérisé en ce que** la machine-outil est une machine d'usinage à haute vitesse, telle qu'un centre d'usinage.

6. Dispositif selon l'une des revendications précédentes, **caractérisé en ce que** le liquide de refroidissement est du liquide de lubrification de coupe.

7. Dispositif selon l'une des revendications précédentes, **caractérisé en ce que** le liquide de refroidissement est recyclé par une centrale de filtration ayant pour fonctions d'aspirer du liquide au fond du bâti de la machine-outil, de filtrer le liquide aspiré, le cas échéant de le ramener à sa température de refroifissement, et de pomper le liquide pour le réinjecter dans la buse multidirectionnelle (10) au travers de la tubulure (9).

8. Dispositif selon l'une des revendications précédentes, **caractérisé en ce que** la buse multidirectionnelle (10) est également apte à arroser la zone d'usinage (Z) pour entraîner les copeaux d'usinage avec le liquide de refroidissement vers le fond du bâti de la machine-outil.

## Patentansprüche

1. Vorrichtung zur homogenen Kühlung des Arbeitsbereichs (Z) einer Werkzeugmaschine, umfassend wenigstens eine Eintrittsröhre (9) für Flüssigkeit unter Abkühldruck, welche mit wenigstens einem Mittel (10) zur Verteilung der Kühlflüssigkeit zum Bearbeitungsbereich (Z) verbunden ist, **dadurch gekennzeichnet, daß** das Mittel zur Verteilung (10) eine mehrfach gerichtete Düse umfaßt, die das Sprühen der Kühlflüssigkeit in praktisch dem gesamten von dem zu kühlenden Bearbeitungsbereich (Z) erlaubt, und daß die mehrfach gerichtete Düse (10) einen Rotationskopf umfaßt, der Sprühöffnungen zum Sprühen von Kühlflüssigkeit im Volumen des Bearbeitungsbereichs (Z) hat.

2. Vorrichtung gemäß Anspruch 1, **dadurch gekennzeichnet, daß** die mehrfach gerichtete Düse (10) selbstdrehend ist.

3. Vorrichtung gemäß Anspruch 1 oder 2, **dadurch gekennzeichnet, daß** die mehrfach gerichtete Düse (10) von der Art Drehkreuz ist.

4. Vorrichtung gemäß einem der vorgenannten Ansprüche, **dadurch gekennzeichnet, daß** der Bearbeitungsbereich (Z) durch eine Einfassung (C) gebildet wird, in dem der Bearbeitungskopf (3) der Werkzeugmaschine, das zu bearbeitende Stück (6) und die mehrfach gerichtete Düse (10) angeordnet sind.

5. Vorrichtung gemäß einem der vorgenannten Ansprüche, **dadurch gekennzeichnet, daß** die Werkzeugmaschine eine Hochgeschwindigkeits-Bearbeitungsmaschine, wie zum Beispiel ein Bearbeitungszentrum ist.

6. Vorrichtung gemäß einem der vorgenannten Ansprüche, **dadurch gekennzeichnet, daß** die Kühlflüssigkeit Verschnitt-Schmierflüssigkeit ist.

7. Vorrichtung gemäß einem der vorgenannten Ansprüche, **dadurch gekennzeichnet, daß** die Kühlflüssigkeit durch eine Filtrierzentrale wiedergewonnen wird, deren Funktion im Aufsaugen der Flüssigkeit auf dem Boden des Tragelements der Werkzeugmaschine, dem Filtrieren der aufgesaugten Flüssigkeit, gegebenenfalls in ihrer Rückführung auf ihre Kühltemperatur und im Abpumpen der Flüssigkeit zu ihrem Wiedereinspritzen in die mehrfach gerichtete Düse (10) durch das Rohr (9) besteht.

8. Vorrichtung gemäß einem der vorgenannten Ansprüche, **dadurch gekennzeichnet, daß** die mehrfach gerichtete Düse (10) ebenfalls geeignet ist, den Bearbeitungsbereich (Z) zu besprühen, um den Bearbeitungsverschnitt mit der Kühlflüssigkeit auf den Boden des Tragelements der Werkzeugmaschine zu bringen.

## Claims

1. Device for homogeneously cooling the machine zone (Z) of a machine-tool including at least one cooling under pressure liquid intake tube (9) connected to at least one element (10) for distributing the cooling liquid towards the machining zone (Z), **characterised in that** the distribution element (10) includes a multidirectional nozzle for spraying virtually all the volume of the cooling liquid occupied by the machining zone (Z) to be cooled, and **in that** the multidirectional nozzle (10) comprises a rotary head having orifices for spraying jets of the cooling liquid into the volume of the machining zone (Z).

2. Device according to claim 1, **characterised in that** the multidirectional nozzle (10) is self-rotating.

3. Device according to claim 1 or 2, **characterised in that** the multidirectional nozzle (10) is of the tourniquet type.

4. Device according to one of the preceding claims, **characterised in that** the machining zone (Z) is constituted by a chamber (C) housing the machining head (3) of the machine-tool, the part to be machined (6) and the multidirectional nozzle (10).

5. Device according to one of the preceding claims, **characterised in that** the machine-tool is a high-speed machining machine, such as a machining centre.

6. Device according to one of the preceding claims, **characterised in that** the cooling liquid is a lubrication cutting oil.

7. Device according to one of the preceding claims, **characterised in that** the cooling liquid is recycled by a filtering centre having used for sucking up the liquid at the bottom of the frame of the machine-tool, filtering the sucked up liquid, if appropriate bring it back to its cooling temperature, and pumping the liquid so as to reinject it into the multidirectional nozzle (10) through the tube (9).

8. Device according to one of the preceding claims, **characterised in that** the multidirectional nozzle (10) is also able to spray the machining zone (Z) so as to drive the machining chips and the cooling liquid to the bottom of the frame of the machine-tool.
